# EUROPÄISCHE PATENTANMELDUNG

(11) **EP 1 026 557 A2**
(43) Veröffentlichungstag der Anmeldung: **09.08.2000**
(21) Anmeldenummer: 00100947.1
(22) Anmeldetag: 19.01.2000
(51) Int. Cl.: G03H 1/02

(54) **Fälschungssicheres, laserbeschriftbares Etikett erzeugt durch Beugungsgitter**

(30) Priorität: 05.02.1999 DE 19904823
(71) Anmelder: Beiersdorf Aktiengesellschaft, 20245 Hamburg (DE)
(72) Erfinder: Groth, Detlef, 25469 Halstenbek (DE); Koops, Arne, 22083 Hamburg (DE); Burmeister, Axel, 21244 Buchholz (DE); Stähr, Jochen, 30179 Hannover (DE)

(57) **Zusammenfassung**

Verfahren zur Herstellung einer Folie, bei dem zunächst eine Stützträgerfolie mittels eines Prägewerkzeuges geprägt wird, wobei das Prägewerkzeug holographische Strukturen aufweist und anschließend eine Folie auf der geprägten Stützträgerfolie erzeugt wird, so daß sich auf der Folie zumindest ein Hologramm ergibt.

## Beschreibung

Die Erfindung betrifft ein Verfahren und die daraus resultierenden Produkte zur Herstellung eines fälschungssicheren Etiketts, auf dem sich eine optisch-aktive Abbildung befindet, welche mittels diffraktiver Strukturen erzeugt wurde.

Da die Hologramme nur mit sehr hohem technischen Aufwand kopiert werden können, werden sie heutzutage beispielsweise auf den weit verbreiteten Chipkarten (ec-Karte) und Geldscheinen eingesetzt.

Die bekannten Verfahren zur Herstellung von Etiketten mit Beugungsgittern und Hologrammen sind sehr aufwendig und kostenintensiv.

Hauptsächlich werden diffraktive beziehungsweise holographische Strukturen durch ein Prägeverfahren (zum Beispiel Holosecure mit shim) oder Druckverfahren (zum Beispiel Holoprint) auf einen Folienträger übertragen, die in einem nachfolgenden Schritt durch Auftragen einer metallischen Schicht sichtbar gemacht werden.

Zum einem kann dann durch ein Heißprägeverfahren die Übertragung der holographischen, metallischen, Schicht auf das Trägermaterial (zum Beispiel Konzertkarten, Banknoten) erfolgen. Nachteil dieser Etiketten ist, daß diese eine hohe Anfälligkeit gegenüber mechanischen und Umwelteinflüssen besitzen. Sie können unter normalen Gebrauch ihre optischen Eigenschaften verlieren, so daß nicht gewährleistet werden kann, daß der Verlust eine Aussage über die Fälschung oder regen Gebrauch gibt.

Aus diesem Grunde werden Etiketten mit einem Schutzlaminat eingesetzt,um diesen Nachteilen entgegenzuwirken.

Solche Hologrammfolien haben den folgenden Aufbau:
- Trägerfolie aus zum Beispiel Polyethylenterephthalat (PET) mit einer vorzugsweisen Dicke von 12 µm, auf die eine strukturierte Lackschicht aufgebracht ist
- Metallschicht von 1 von 10 nm (zum Beispiel Aluminium aufgedampft)
- Kleberschicht mit einer bevorzugten Dicke zwischen 10 und 25 µm

Dieser Mehrschichtaufbau erfüllt seinen Zweck, da das entstehende Produkt mechanisch beständiger ist.
Dennoch neigt dieser Aufbau zur Trennung der Einzelschichten, dem Delaminieren, so daß die durch Gebrauch hervorgerufene Zerstörung eine Identifizierung auf Originalität nicht mehr möglich ist.
Alle diese Methoden werden oberflächlich aufgebracht und somit nicht oder nur stark eingeschränkt für die bekannten Laseretiketten nutzbar, die zum Beispiel bei Typenschildem Anwendung finden, da dann die optisch hochwertige und extrem widerstandsfähige Oberfläche verändert und verschlechtert wird. Darüber hinaus wird durch das Aufbringen einer zusätzlichen Schicht, wie oben beschrieben, die Beschriftbarkeit und die Schneidbarkeit mittels eines NdYAG- Lasers verhindert.

Aufgabe der Erfindung ist es, ein Verfahren zur Herstellung einer Folie mit einem Hologramm zu schaffen, das die bekannten Nachteile des Standes der Technik nicht aufweist.

Gelöst wird diese Aufgabe durch ein Verfahren, wie es gemäß Anspruch 1 geschildert ist. Gegenstand der Unteransprüche sind besonders vorteilhafte Ausführungsformien des Verfahrens sowie eine Folie mit einem Hologramm, die nach dem erfindungsgemäßen Verfahren erhalten werden kann.

Dementsprechend betrifft die Erfindung ein Verfahren zur Herstellung einer Folie, bei dem zunächst eine Stützträgerfolie mittels eines Prägewerkzeuges geprägt wird, wobei das Prägewerkzeug holographische Strukturen aufweist, und anschließend eine Folie auf der geprägten Stützträgerfolie erzeugt wird, so daß sich auf der Folie die Struktur abbildet und zumindest ein Hologramm ergibt.

Die dem Prägegut zugewandte Seite des Prägewerkzeugs ist also so geformt, daß eine Struktur entsteht, welche ein Beugungsgitter beziehungsweise eine holographische Abbildung enthält.

Da dieses Hologramm in der Folie selbst erzeugt wird, ist ein schädlicher Mehrschichtaufbau nicht gegeben, und das so erzeugte Beugungsgitter besitzt die gleiche Beständigkeit und Belaserbarkeit wie die Folie selbst

In einer vorteilhaften Ausführungsform besteht die Stützträgerfolie aus einem duroplastischen oder thermoplastischen Material, das dauerhaft geprägt ist, und zwar insbesondere aus Polyester oder Polyamid.

Die Stützträgerfolie weist bevorzugt eine Stärke auf von 12 bis 500 µm, insbesondere 50 µm.

Die Stützträgerfolie kann mit unterschiedlichsten Motiven versehen werden, zum Beispiel Firmenlogos oder Werbung. Durch die Prägung der Stützträgerfolie entsteht ein Negativabdruck auf der sichtbaren Oberfläche der erfindungsgemäßen Folie.
Die Prägung der Stützträgerfolie kann zum Beispiel mit einem Prägeblech in unterschiedlicher Stärke beziehungsweise Tiefe vorgenommen werden. Die Prägetiefe ist abhängig von dem eingestellten Prägedruck, der auf den im Prägeverfahren zum Einsatz kommenden Magnetzylinder wirkt und des Gegendruckzylinders.

In einer weiteren vorteilhaften Ausführungsform wird die Folie auf die Stützträgerfolie extrudiert, beschichtet oder gegossen.

Vorzugsweise besteht die Falle aus einer Lackschicht, die insbesondere anschließend elektronenstrahlgehärtet wird.

Prinzipiell sind für die erfindungsgemäße Aufgabe vier Lacktypen verwendbar, sofern ihre Stabilität ausreicht, zum Beispiel säurehärtende Alkydmelaminharze, additionsvernetzende Polyurethane, radikalisch härtende Styrollacke und ähnliche. Besonders vorteilhaft sind jedoch strahlenhärtende Lacke, da sie sehr schnell ohne langwieriges Verdampfen von Lösungsmitteln oder Einwirken von Wärme aushärten.
Solche Lacke sind zum Beispiel von A. Vrancken beschrieben worden (Farbe und Lack 83,3 (1977) 171).

Weiter vorzugsweise weist die Lackschicht eine Stärke von 0,5 bis 30 µm, insbesondere 5 bis 15 µm, auf.

Auf die geprägte Stützträgerfolie wird die bevorzugt eingesetzte Lackschicht aufgetragen und durch Einwirkung eines Elektronenstrahls mit hoher Energie (150 bis 500 kV) unter effektiv sauerstofffreien Bedingungen gehärtet.

Weiter vorzugsweise ist die Lackschicht mehrschichtig, und die Schichten bestehen aus gehärtetem, d.h. vernetztem Lack, dabei insbesondere aus einer oberen, 1 bis 20 µm starken, elektronenstrahlgehärteten, lösungsmittelfrei aufgetragenen Lackschicht und einer unteren, 20 bis 500 µm starken, elektronenstrahlgehärteten, lösungsmittelfrei aufgetragenen Lackschicht.

In einer weiteren vorteilhaften Ausführungsform ist auf der Folie eine zusätzliche Kleberschicht von 5 bis 70 µm, insbesondere 10 bis 30 µm, Stärke und erforderlichenfalls auf dieser ein Trennpapier angeordnet.
Die dritte Schicht aus einem Haftkleber, Heißkleber oder Reaktivkleber oder dergleichen ist zur Verklebung mit einem Untergrund vorgesehen.

Schließlich ist vom Erfindungsgedanken eine Folie umfaßt, die nach einem Verfahren erhalten werden kann, wie es oben geschildert ist.

Die nach dem erfindungsgemäßen Verfahren hergestellte Folie zeichnet sich durch eine Vielzahl von Vorteilen aus, die derartig für den Fachmann nicht vorhersehbar waren. Die Folie ist aufgrund der Hologramme schnell zu erkennen, wobei die Hologramme optisch sichtbar sind allerdings kaum fühlbar. Es entsteht also so gut wie kein haptischer Eindruck.
Erstmals ist mit der Folie die Darstellung von Hologrammen auch auf schwarzem Untergrund möglich.

Anhand zweier Ausführungsbeispiele soll im folgenden die Erfindung erläutert werden, ohne sie damit einzuschränken. Es zeigen
- Figur 1: die Prägung der Stützträgerfolie und
- Figur 2: den Aufbau der erfindungsgemäßen Folie.

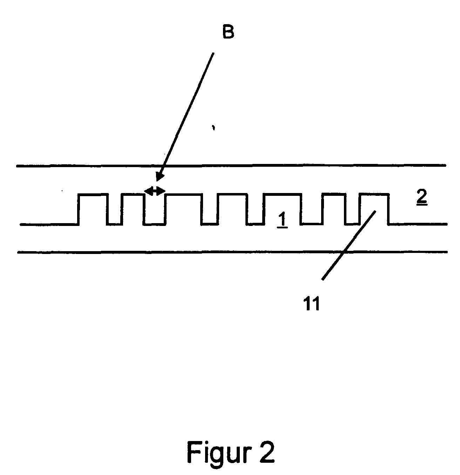

Gemäß Figur 2 werden auf einer Stützträgerfolie 1 zunächst die gewünschten Hologramme eingeprägt, beispielsweise das Firmenlogo des Herstellers der erfindungsgemäßen Folie.
Hierzu wird eine Walze 4 benutzt, auf der ein Prägeblech 3 befestigt ist. Das Prägeblech 3 weist bedarfsgerechte Beugungsgitter auf.

Die Stützträgerfolie 1 wird unter der in Pfeilrichtung rotierenden Walze 4 entlang geführt, wobei die Walze 4 mit einem Druck von 500 bis 2000 psi auf die Stützträgerfolie 2 gepreßt wird.
Die Stützträgerfolie 1 weist die einzelnen Prägelinien 11 auf, deren größter Abstand A stets eine Breite von kleiner 20 µm aufweist.

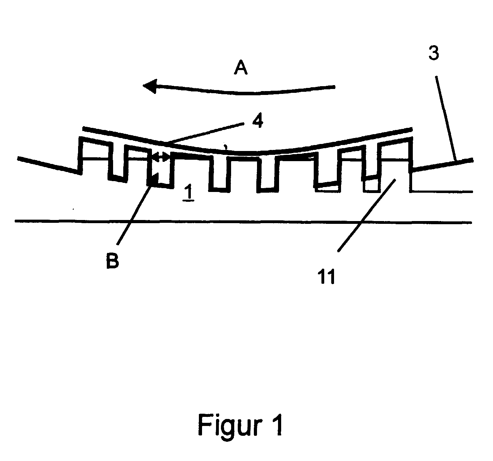

In dem in Figur 1 ist dargestellt, wie eine Lackschicht 2 auf der zuvor geprägten Stützträgerfolie 1 ausgegossen und verteilt worden ist. In der Lackschicht 2 ergeben sich Einprägungen, deren Breite B weitgehend identisch mit dem Abstand A sind.

Nach dem Abnehmen der Folie von der Stützträgerfolie 1 sind auf der aus dem erfindungsgemäßen Verfahren gewonnenen Folie Hologramme zu erkennen, die hier keinen haptischen Eindruck hinterlassen.

### Beispiel 1

Ein handelsübliches Polyurethanacrylat aus langkettigem Polyesterdiol, aliphatischem Diisocyanat und endständigen Acrylgruppen (Molekulargewicht ca. 1500, Funktionalität 2) wird mit 20% Hexandiolbisacrylat vermischt Man erhält eine hochviskose Flüssigkeit von etwa 10 Pa*s. Aus dieser wird hergestellt:
- Eine Schwarzpaste A durch Anreiben mit 12% Ruß FCF (mittlerer Teilchendurchmesser 23 µm) am Dreiwalzenstuhl und
- eine Weißpaste B durch Anreiben mit 45% eines Al und Si stabilisierten Rutilpigments (TiO₂-Gehalt 90%, Dichte 3,9 g/m²).

Paste A wird in einer Stärke von 10 µm auf eine 50 µm starke biaxial gereckte und geprägte Polyesterfolie gestrichen und durch einen Elektronenstrahl von 350 keV mit einer Dosis von 80 kGy unter Inertgas gehärtet.

Darauf wird eine Weißpaste B mit einer Stärke von 50 µm aufgetragen und erneut mit dem Elektronenstrahl unter Inertgas mit einer Dosis von 3 Mrad gehärtet.

Auf dieses Produkt wird ein Haftkleber entsprechend der DE-OS 15 69 898 gestrichen, so daß die Schicht nach dem Trocknen eine Stärke von 20 µm aufweist. Der Haftkleber wird mit handelsüblichem Trennpapier abgedeckt.

Danach wird die Polyesterfolie abgezogen, so daß die mit den Prägungen versehene und ansonsten spiegelglatte schwarze Oberfläche des Produktes zum Vorschein kommt.

Diese ist mit einem steuerbaren Leistungslaser zum Beispiel mit einem Balkencode schnell beschriftbar. Der Kontrast ist so hoch, daß der Code über 1 m Entfernung mit Auswerte-Gerät fehlerfrei zu lesen ist.

Ein Erhitzen des Materials für 1 Stunde auf 200 °C führt zu Schrumpf von unter 1% in Längs- und Querrichtung. Eintauchen in Wasser und/oder Bewitterung im Weathermometer für 500 h führt zu keiner Beeinträchtigung.

## Patentansprüche

1. Verfahren zur Herstellung einer Folie, bei dem zunächst eine Stützträgerfolie mittels eines Prägewerkzeuges geprägt wird, wobei das Prägewerkzeug holographische Strukturen aufweist und anschließend, eine Folie auf der geprägten Stützträgerfolie erzeugt wird, so daß sich auf der Folie zumindest ein Hologramm ergibt.

2. Verfahren nach Anspruch 1, dadurch gekennzeichnet, daß die Stützträgerfolie aus einem duroplastischen oder thermoplastischen Material besteht, das dauerhaft geprägt ist.

3. Verfahren nach den Ansprüchen 1 und 2, dadurch gekennzeichnet, daß die Stützträgerfolie aus Polyester oder Polyamid besteht.

4. Verfahrern nach den Ansprüchen 1 bis 3, dadurch gekennzeichnet, daß die Folie auf die Stützträgerfolie extrudiert, beschichtet oder gegossen wird.

5. Verfahren nach den Ansprüchen 1 bis 4, dadurch gekennzeichnet, daß aus einer Lackschicht besteht, die insbesondere anschließend elektronenstrahlgehärtet wird.

6. Verfahren nach Anspruch 5, dadurch gekennzeichnet, daß die Lackschicht eine Stärke von 0,5 bis 30 µm, insbesondere 5 bis 15 µm, aufweist.

7. Verfahren nach den Ansprüchen 1 bis 6, dadurch gekennzeichnet, daß auf der Folie eine zusätzliche Kleberschicht von 5 bis 70 µm Stärke und erforderlichenfalls auf dieser ein Trennpapier angeordnet ist.

8. Folie erhältlich nach einem Verfahren gemäß mindestes einem der vorherigen Ansprüche.
